**Europäisches Patentamt**

**European Patent Office**

**Office européen des brevets**

(19)

(11) Numéro de publication : **0 345 190 B1**

(12)

# FASCICULE DE BREVET EUROPEEN

(45) Date de publication du fascicule du brevet :
**02.09.92 Bulletin 92/36**

(51) Int. Cl.$^5$ : **F24F 6/12**

(21) Numéro de dépôt : **89460013.9**

(22) Date de dépôt : **30.05.89**

(54) **Humidificateur pour système de conditionnement d'air.**

(30) Priorité : **03.06.88 FR 8807594**
**27.10.88 FR 8814379**
**14.02.89 FR 8902063**

(43) Date de publication de la demande :
**06.12.89 Bulletin 89/49**

(45) Mention de la délivrance du brevet :
**02.09.92 Bulletin 92/36**

(84) Etats contractants désignés :
**AT BE CH DE ES FR GB GR IT LI LU NL SE**

(56) Documents cités :
**EP-A- 0 251 196**
**DE-A- 1 604 305**
**FR-A- 1 266 302**
**FR-A- 1 512 711**

(73) Titulaire : **INDUSTRIELLE DU PONANT SA**
**Z.I. Saint-Eloi**
**F-29220 Landerneau (FR)**

(72) Inventeur : **Alix, Guy-Paul**
**13, rue Richelieu**
**F-29200 Brest (FR)**
Inventeur : **Kohler, Marc**
**10, rue Van Gogh**
**F-29200 Brest (FR)**
Inventeur : **Tranvoez, Jean-Michel**
**10, rue de Provence**
**F-95570 Bouffemont (FR)**
Inventeur : **Manchec, Jean-Marie**
**810 Stonebrook Street**
**Simi Valley CA 93065 (US)**

(74) Mandataire : **Le Guen, Louis François**
**CABINET Louis LE GUEN 38, rue Levavasseur**
**B.P. 91**
**F-35802 Dinard Cédex (FR)**

EP 0 345 190 B1

Jouve, 18, rue Saint-Denis, 75001 PARIS

## Description

La présente invention concerne un humidificateur pour système de conditionnement d'air et, plus particulièrement, pour système de conditionnement d'air d'aéronef. Un humidificateur, qui est décrit dans le document EP-A-0 251 196, comprend, dans une gaine de circulation de l'air à humidifier, un générateur d'eau dont la sortie délivre des particules d'eau, ladite sortie se trouvant dans un orifice au sommet d'une surface divergente dans le sens de circulation de l'air.

Toutes les installations de conditionnement d'air comprennent une chambre d'humidification. A l'origine, les dispositifs d'humidification comportaient des injecteurs centrifuges destinés à disperser l'eau et l'eau dispersée était entraînée par de l'air comprimé. Toutefois le degré d'atomisation de l'eau était insuffisant si bien qu'il fallait prévoir une cuve collectrice pour récupérer l'eau non vaporisée. Ensuite, on a proposé d'utiliser des injecteurs à air comprimé produisant l'atomisation de l'eau. Pour réduire la longueur des dispositifs d'humidification, on a été conduit à orienter les jets d'air comprimé atomisant l'eau en sens contraire de celui de l'air à humidifier. A cet égard, on pourra se référer au document FR-A-1 266 302 et FR-A-1 512 711. Ces installations ont comme inconvénients qu'ils nécessitent une grande quantité d'eau, qu'ils sont donc lourds et qu'ils sont quand même encombrants. De plus, pour un meilleur rendement, elles nécessitent un chauffage de l'eau à atomiser. Cela entraîne une dépense d'énergie non négligeable. Enfin, tout chauffage d'eau, sans précaution, entraîne des dépôts de tartre.

Dans le document DE-A-1 604 305 est décrit un humidificateur dans lequel de l'eau sortant d'une buse est soumise à l'action d'un générateur d'ultra-sons qui provoque l'atomisation de l'eau dont les particules sont entraînées par l'air à humidifier. Dans cet humidificateur, rien n'est prévu pour assurer un bon mélange de l'eau atomisée et l'air.

Les installations de conditionnement d'air destinées à fonctionner dans des avions de transport de passagers doivent être aussi légères que possible. Il en résulte que les humidificateurs mentionnés en premier lieu ci-dessus ne conviennent pas.

En pratique, ces avions de transport évoluent à haute altitude où la température est fortement négative et l'air raréfié complètement sec. Les humidificateurs doivent donc satisfaire des conditions particulières. Le dispositif décrit dans le document DE-A-1 604 305, qui peut être léger, ne convient pas car une partie de l'eau atomisée par ultra-sons se condense sur les parois du conduit d'air.

Enfin, les humidificateurs à atomiseur à ultra-sons donnent, en ce qui concerne l'atomisation proprement dite, satisfaction quand on utilise de l'eau déminéralisée. En pratique, il est plus économique d'utiliser de l'eau courante. Toutefois, celle-ci contient des minéraux en quantités variables. Pour une minéralisation de base 1 à New York, N.Y., Etats-Unis, on a une minéralisation de 40 en Californie. Cette eau produit de la poussière en s'évaporant. Il faut donc l'épurer, ce qui est coûteux. D'autre part, une épuration faite à bord d'un avion entraîne un équipement lourd et une consommation d'eau importante. Pour produire six litres d'eau épurée, il faut quarante litres d'eau courante.

Un objet de l'invention consiste à prévoir un humidificateur qui ne souffre pas des inconvénients mentionnés ci-dessus, dont le dispositif d'atomisation de l'eau soit léger et peu encombrant et qui surtout améliore le mélange de l'eau atomisée et de l'air.

Un autre objet de l'invention consiste à prévoir un humidificateur qui peut fonctionner avec des générateurs d'eau atomisée différents.

Les objets mentionnés ci-dessus sont atteints par les humidificateurs qui sont définis dans les revendications ci-jointes.

La description suivante d'exemples de réalisation fait apparaître les caractéristiques de ces revendications et est faite en relation avec les dessins joints, parmi lesquels:

la Fig. 1 est une vue schématique d'un premier exemple d'humidificateur, suivant l'invention,

la Fig. 2 est le schéma d'une variante de l'humidificateur de la Fig. 1, et

la Fig. 3 est un schéma d'un second exemple de réalisation d'un humidificateur, suivant l'invention.

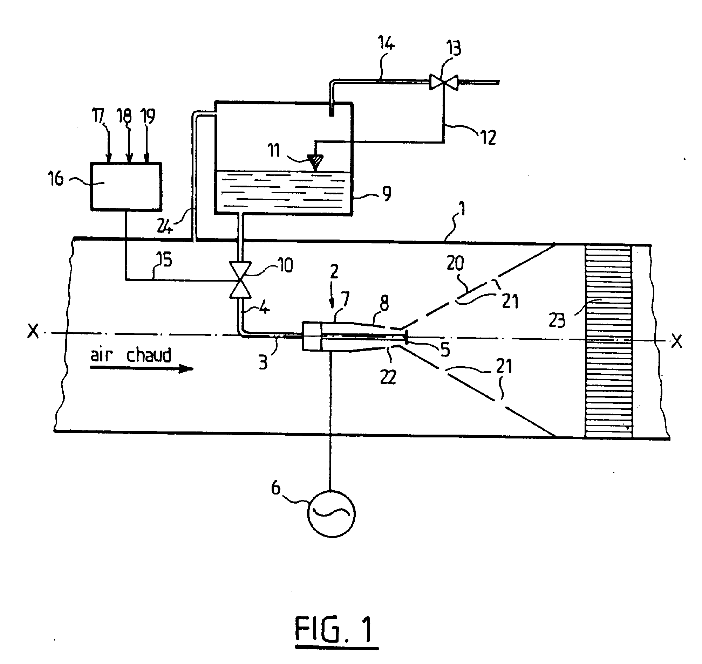

A la Fig. 1, dans une gaine cylindrique 1 dans laquelle circule de l'air chaud, réchauffé ou préchauffé, dont le sens de circulation est, comme l'indique la flèche, de gauche à droite en regardant la Fig. 1, est installé un atomiseur d'eau à ultra-sons 2, les moyens de fixation de l'atomiseur 2 dans la gaine 1 n'étant pas montrés. L'atomiseur 2 comprend un tube 3 dont l'entrée est reliée à un tube transversal 4 d'amenée d'eau liquide et dont la sortie est reliée à un diffuseur 5 formé d'une petite capsule circulaire présentant de petits orifices à sa périphérie. Par ailleurs, le tube 3 est soumis aux vibrations ultrasoniques d'un quartz, non montré, alimenté par un oscillateur électrique 6, dont la fréquence est adaptée aux caractéristiques du quartz.

L'atomiseur 2 est complété par un carter cylindrique 7 se terminant du côté du diffuseur 5 par une partie conique 8 légèrement convergente. L'axe du carter se confond avec celui du tube 3 et l'axe X-X de la gaine 1.

Le tuyau transversal 4 est relié au fond d'une bâche à eau 9 par une vanne de régulation 10. La bâche 9, située à l'extérieur de la gaine 1, comprend un système de mise à niveau constant, schématiquement représenté par un flotteur 11 relié par une liaison de commande 12 à une vanne 13 montée sur un tuyau 14 d'alimentation en eau débouchant dans la bâche 9. L'entrée de commande de la vanne 10 est reliée par une liaison 15 à un circuit de commande 16 dont les entrées 17 à 19 reçoivent des signaux émis par un hygrostat d'ambiance, un hygrostat de gaine et un pressostat, ces trois appareils n'étant pas montrés. Le signal fourni par le pressostat varie en fonction de l'altitude.

A la petite base de la partie conique 8 du carter 7 est reliée la petite base d'un cône 20 d'axe X-X dont la grande base est rendue solidaire de la surface interne de la gaine 1.

La paroi latérale du cône 20 est, comme montré, percée de trous 21 par lesquels l'air chaud entre dans le cône. Le régime d'écoulement de l'air qui passe par les trous 21 en aval du cône est tourbillonnaire ce qui assure un mélange homogène de l'air et des particules d'eau émises par le diffuseur 5.

Des trous 22 sont également prévus dans la partie conique 8 du carter 7 de manière à laisser passer de l'air chaud d'entraînement derrière le diffuseur 5. En pratique, la perte de charge créée par le cône percé 20 est suffisante pour obtenir un bon débit de cet air d'entraînement.

En aval du cône 20, on a montré un évaporateur 23 monté en travers de la gaine 1. L'évaporateur 23 peut être réalisé sous forme d'une pluralité de canaux longitudinaux de faible section, formant ensemble une structure en nid d'abeilles, par exemple. Le matériau des parois des conduits peut être un média filtrant quelconque ou un matériau absorbant, tel que du papier buvard, etc. En pratique, les gouttes d'eau relativement grosses éventuellement entraînées en aval du cône 20 sont piègées sur ces parois en média filtrant où elles s'étalent pour restituer ensuite l'eau sous forme de vapeur.

Entre le haut de la bâche 9 et la paroi de la gaine 1, en amont du cône 20, est prévu un tuyau 24 ouvert au deux bouts pour égaliser les pressions au-dessus de l'eau de la bâche et à l'entrée de la gaine 1.

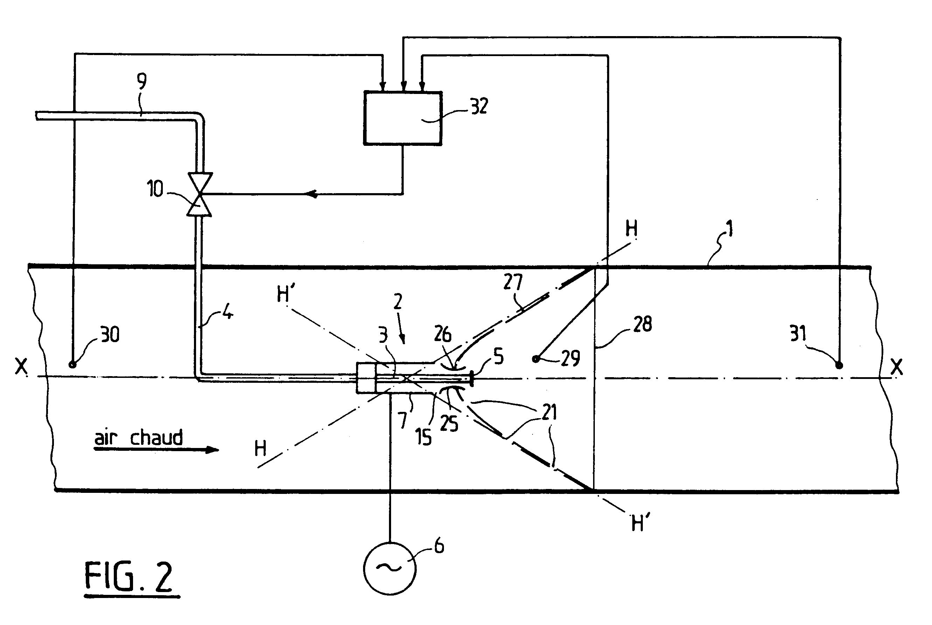

Dans l'exemple de réalisation de la Fig. 2, l'orifice prévu au sommet de la surface d'allure conique (27) est pourvu d'une buse d'entrée d'air (25) en forme de Venturi.

Autour du col de la buse 25 est reliée le bord d'un trou 26 percé au sommet d'une surface de révolution 27 d'axe X-X qui est ouverte vers l'aval de la gaine 1 et qui s'étend jusqu'à celle-ci pour s'y raccorder par un cercle 28. Dans l'exemple de réalisation décrit, la surface de révolution 27 a une génératrice en forme d'hyperbole dont les asymptotes H-H et H'-H' sont tracées en traits mixtes. D'autres formes de surface de révolution sont possibles comme celles qu'on a mentionnées dans le préambule, ou encore des formes voisines de celles-ci. De préférence, le rayon de courbure au sommet de la surface de révolution 27 doit être égal à 1/6 de la distance entre ce sommet et le centre du cercle 28.

La paroi latérale de la surface de révolution 27 est percée de trous 21, analogues aux trous 21, Fig. 1, par lesquels l'air chaud entre dans cette surface. Le régime d'écoulement de l'air en aval de la surface 27 est tourbillonnaire ce qui assure aussi un mélange homogène de l'air et des particules d'eau émises par le diffuseur 5.

Des trous 15 sont également prévus dans le carter cylindrique 7, en amont de la buse 25, de manière à laisser passer de l'air chaud d'entraînement derrière le diffuseur 5. En pratique, la perte de charge créée par la surface 27 percée de trous 21 est suffisante pour obtenir un bon débit de cet air d'entraînement.

On a prévu, dans le volume interne de la surface de révolution 27, une sonde de température 29 qui comporte, à sa surface externe, une gangue alvéolée. Cette gangue est humidifiée par le brouillard d'eau atomisée, mais l'eau s'y évapore étant donné le courant d'air, ce qui crèe un refroidissement. Donc, la sonde 29 mesure la température humide de l'air humidifié.

En amont de l'atomiseur 2, on a également prévu une sonde de température 30 qui mesure la température de l'air à l'entrée. Enfin, en aval de l'atomiseur 2, on a prévu une troisième sonde de température 31 qui mesure la température de sortie. La différence entre les températures mesurées par les sondes 30 et 31 est normalement négative ce qui correspond au refroidissement dû à l'eau évaporée.

Les trois sondes 29, 30 et 31 sont reliées aux entrées correspondantes d'un microprocesseur 32 qui délivre un signal de commande à la vanne de régulation 10. La vanne 10 peut, par exemple, fonctionner par tout ou rien pendant un intervalle de temps déterminé à chaque fois qu'elle a été ouverte, c'est-à-dire que le débit moyen de l'eau qui y passe est déterminé par la fréquence de ses ouvertures.

En pratique, les données recueillies par la sonde 29 sont exploitées dans le microprocesseur 32 pour faire varier la fréquence des ouvertures. La différence des températures recueillies par les sondes 30 et 31 sert, par exemple, à déclencher une alarme si elle est trop faible, ce qui sous-entend une évaporation insuffisante. Cette différente peut aussi être utilisée par le microprocesseur 32 pour augmenter le temps de fonctionnement de la vanne à chaque ouverture afin d'atteindre la valeur de différence désirée.

A titre d'exemple, pour une gaine 1 d'un diamètre de 150 mm, l'angle des asymptotes H-H et H'-H' avec l'axe X-X peut être de 15°. Dans le dessin de la Fig. 2 on n'a pas respecté cet angle de 15°, les abscisses le long de l'axe X-X étant comprimées. Ainsi, avec un angle de 15°, la distance entre le cercle 28 et le sommet de la surface 27 serait d'environ 250 mm.

En pratique, toujours concernant l'exmple de réalisation de la Fig. 2, le diamètre minimal de la buse en Venturi 25 peut être de l'ordre 30 mm, soit environ 2/10 du diamètre de la gaine. La surface de révolution 27 peut comporter cinq rangées de trous 21, chaque rangée comportant cinq trous uniformément répartis autour de la surface. La répartition, les dimensions et les nombres des trous 21 peuvent être sensiblement les mêmes que dans le cône 20 de la Fig. 1.

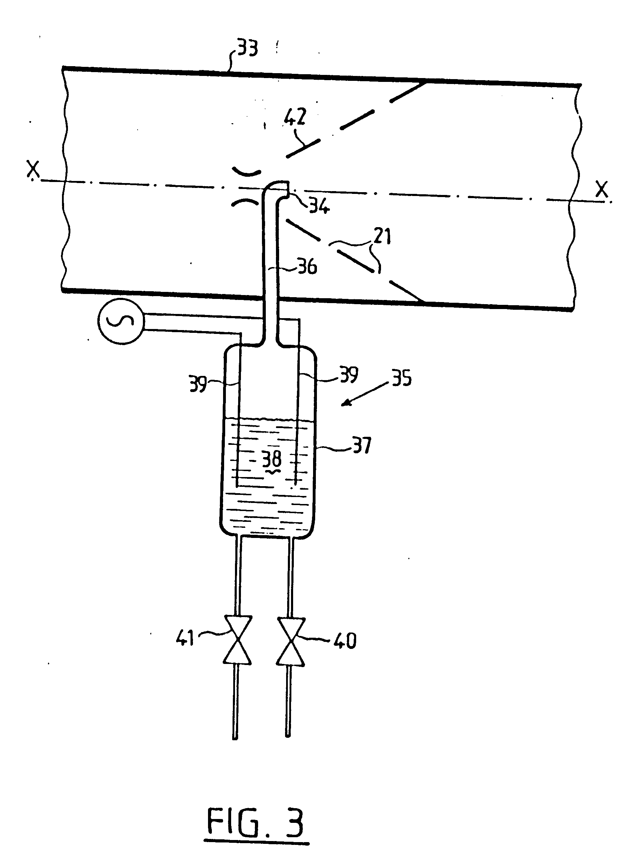

Dans l'exemple de réalisation de la Fig. 3, l'atomiseur 2 est remplacé par un générateur de vapeur.

Dans la gaine cylindrique 33 dans laquelle circule de l'air chaud, réchauffé ou préchauffé, dont le sens de circulation est, comme l'indique la flèche, de gauche à droite en regardant la Fig. 3, est installée, dans l'axe de la gaine 33, la bouche de sortie 34 d'un générateur de vapeur 35, les moyens de fixation de la bouche 34 dans la gaine 33 n'étant pas montrés. La bouche de sortie de vapeur 34 est reliée au générateur de vapeur 35 par un conduit 36, qui passe à travers la paroi de la gaine 33.

Le générateur de vapeur 35 se compose d'un récipient 37 relié au conduit 36 et qui contient une certaine quantité d'eau 38. Des électrodes 39 plongent à travers les parois du récipient 37 dans l'eau 38. Quand on fait passer un courant électrique, continu ou alternatif, entre les électrodes 39, la résistance de l'eau, chargée de minéraux, provoque, par effet Joule, un échauffement. Il en résulte que l'eau bout et produit de la vapeur qui s'écoule par le conduit 36 pour sortir par la bouche 34 dans le sens de circulation de l'air dans la gaine 33.

Le réservoir est relié, par l'intermédiaire d'une vanne 40, à une canalisation d'alimentation en eau, et, par une vanne 41, à une canalisation d'évacuation. Le fonctionnement de la vanne 40 peut être contrôlé par un capteur de niveau d'eau dans le réservoir. L'intensité du courant passant dans les électrodes peut être contrôlée en fonction de divers paramètres.

Autour de la bouche de sortie de vapeur 34, est montée la petite base d'un cône 42 d'axe X-X dont la grande base est rendue solidaire de la surface interne de la gaine 33. Le cône 42 est, dans l'exemple de réalisation montré identique au cône 20, Fig. 1, et comporte également des trous 21.

La paroi latérale du cône 42 est aussi percée de trous 21 par lesquels l'air chaud entre dans le cône. Le régime d'écoulement de l'air en aval du cône est tourbillonnaire ce qui assure un mélange homogène de l'air et de la vapeur émise par la bouche 34.

En amont de la bouche 34, le cône 42 peut être prolongé sur une petite longueur en divergeant vers l'amont pour créer immédiatement autour de la bouche 34 un courant d'air plus rapide.

Au lieu d'un véritable cône divergent, tel que 42, on peut comme dans l'exemple de réalisation de la Fig. 2, utiliser une surface de révolution ouverte, dont le sommet a sensiblement la forme d'une calotte de sphère, le centre de ce sommet étant percé pour le passage de la bouche de sortie de vapeur 34.

Bien entendu, les matières utilisées pour construire le cône 42 ou les surfaces de révolution 27 peuvent être les mêmes que celles qui ont été définies pour le cône 20. On peut aussi utiliser un évaporateur 23 dans les exemples des Figs. 2 et 3. On notera enfin que les trois exemples d'humidificateur décrits ci-dessus sont entièrement statique et que leur poids peut ne pas excéder 5 kg.

**Revendications**

1) Humidificateur pour système de conditionnement d'air comprenant, dans une gaine (1, 33) de circulation d'air chaud à humidifier, un générateur d'eau atomisée ou vaporisée (2, 35) dont l'entrée reçoit de l'eau liquide et dont la sortie délivre des particules ou de la vapeur d'eau, ladite sortie se trouvant dans un orifice percé au sommet d'une surface d'allure conique (20, 27, 42) divergente dans le sens de circulation de l'air et s'étendant jusqu'à la paroi de la gaine (1, 33), caractérisée en ce que la surface d'allure conique est percée de trous (21) par lesquels passe l'air chaud qui rencontre les particules ou la vapeur d'eau, s'y mélange et les entraîne, et en ce que ledit orifice est pourvu d'une buse d'entrée d'air (25) dont le plus petit diamètre est égal à environ 0,2 fois le diamètre de la gaine (1, 33).

2) Humidificateur suivant la revendication 1, caractérisé en ce que la surface d'allure conique est une surface de révolution (27) ouverte vers l'aval, avec un sommet ayant sensiblement la forme d'une calotte de sphère.

3) Humidificateur suivant la revendication 2, caractérisé en ce que la surface de révolution (27) est constituée par un calotte sphérique, prolongée par un tronc de cône.

4) Humidificateur suivant la revendication 3, caractérisé en ce que le demi-angle au sommet du tronc de cône est de l'ordre de 15°.

5) Humidificateur suivant la revendication 2, caractérisé en ce que la génératrice de la surface de révolution (27) est une parabole.

6) Humidificateur suivant la revendication 5, caractérisé en ce que la tangente à la parabole au point de rencontre avec la gaine fait un angle de l'ordre de 15° avec l'axe (X-X) de la gaine.

7) Humidificateur suivant la revendication 2, caractérisé en ce que la génératrice de la surface de révolution (27) est une branche d'hyperbole.

8) Humidificateur suivant la revendication 7, caractérisé en ce que chaque asymptote (H-H, H'-H') de l'hyperbole fait un angle de l'ordre de 15° avec l'axe (X-X) de la gaine.

9) Humidificateur suivant l'une des revendications 1 à 8, caractérisé en ce que la paroi de la surface d'allure conique incorpore des moyens de chauffage, tels que des résistances électriques.

10) Humidificateur suivant l'une des revendications 1 à 9, caractérisé en ce que ledit générateur est un atomiseur d'eau à ultra-sons.

11) Humidificateur suivant l'une des revendications 1 à 9, caractérisé en ce que ledit générateur est une source de vapeur d'eau.

12) Humidificateur suivant la revendication 11, caractérisé en ce que la source de vapeur d'eau est constituée par un récipient contenant de l'eau, avec des électrodes alimentées par courant électrique plongeant dans ledit récipient.

13) Humidificateur suivant l'une des revendications 1 à 12, caractérisé en ce que, en aval de la surface d'allure conique, est prévu, en travers de la gaine, un évaporateur (23).

## Claims

1. A humidifier for an air conditioning system comprising in a circulation casing (1, 33) of the warm air to be humidified an atomised or vaporized water generator (1, 35) the inlet of which receives liquid water and the outlet of which delivers particles or water vapour, the said outlet being located in an orifice pierced at the top of a surface of conical aspect (20, 27, 42) diverging in the direction of circulation of the air and extending as far as the wall of the casing (1, 33), characterised in that the surface of conical aspect is pierced with holes (21) through which the warm air passes which meets the particles or the water vapour, mixes there and carries them along and in that the said orifice is provided with an air inlet tube (25) the smallest diameter of which is equal to about 0.2 times the diameter of the casing (1, 33).

2. A humidifier according to claim 1, characterised in that the surface of conical aspect is a surface of revolution (27) open towards the downstream with a top having substantially the shape of a sphere section.

3. A humidifier according to claim 2, characterised in that the surface of revolution (27) is constituted by sphere section extended by a truncated cone.

4. A humidifier according to claim 3, characterised in that the half angle at the top of the truncated cone is of the order of 15°.

5. A humidifier according to claim 2, characterised in that the generating line of the surface of revolution (27) is a parabola.

6. A humidifier according to claim 5, characterised in that the tangent to the parabola at the point of meeting with the casing forms an angle of the order of 15° with the axis (X-X) of the casing.

7. A humidifier according to claim 2, characterised in that the generating line of the surface of revolution (27) is a hyperbola branch.

8. A humidifier according to claim 7, characterised in that each asymptote (H-H, $H^1$-$H^1$) of the hyperbola forms an angle of the order of 15° with the axis (X-X) of the casing.

9. A humidifier according to one of the claims 1 to 8, characterised in that the wall of the surface of conical aspect incorporates heating means such as electrical resistances.

10. A humidifier according to one of the claims 1 to 9, characterised in that the said generator is an ultrasonic water atomizer.

11. A humidifier according to one of the claims 1 to 9, characterised in that the said generator is a source of water vapour.

12. A humidifier according to claim 11, characterised in that the source of water vapour is constituted by a receptacle containing water with electrodes fed by electric current, passing into the said receptacle.

13. A humidifier according to one of the claims 1 to 12, characterised in that downstream of the surface of conical aspect there is provided, across the casing, an evaporator (23).

## Patentansprüche

1. Befeuchter für eine Klimaanlage, der in einem Umlaufgehäuse (1,33) für die zu befeuchtende warme Luft einen Erzeuger (2,35) für Wassernebel oder Wasserdampf enthält, dessen Einlaß Wasser zugeführt wird und dessen Auslaß Schwebeteilchen oder Wasserdampf liefert, wobei besagter Auslaß in einer an der Spitze einer konischen Mantelfläche (20,27,42) vorgesehenen Öffnung angeordnet ist, die in Richtung des Luftumlaufs divergiert und sich bis an die Wand des Gehäuses (1,33) erstreckt, dadurch gekennzeichnet, daß die konische Mantelfläche von Löchern (21) durchbrochen ist, durch die die warme Luft hindurchströmt, wobei diese auf die Schwebeteilchen oder den Wasserdampf trifft, sich dort mit diesen vermischt und sie weiter transportiert, und dadurch, daß besagte Öffnung mit einem Lufteinlaßrohr (25) versehen ist, dessen kleinster Durchmesser gleich dem ungefähr 0,2-fachen des Durchmessers des Gehäuses (1,33) ist.

2. Befeuchter nach Anspruch 1, dadurch gekennzeichnet, daß die konische Mantelfläche eine sich stromabwärts öffnende Rotationsfläche (27) ist, deren Kopfende im wesentlichen die Form eines Kugelabschnitts hat.

3. Befeuchter nach Anspruch 2, dadurch gekennzeichnet, daß die Rotationsfläche (27) aus einem mittels eines Kegelstumpfes verlängerten Kugelabschnitt gebildet ist.

4. Befeuchter nach Anspruch 3, dadurch gekennzeichnet, daß der Halbwinkel an der Spitze des Kegelstumpfes in der Größenordnung von 15° liegt.

5. Befeuchter nach Anspruch 2, dadurch gekennzeichnet, daß die Erzeugende der Rotationsfläche (27) eine Parabel ist.

6. Befeuchter nach Anspruch 5, dadurch gekennzeichnet, daß eine im Schnittpunkt der Parabel mit dem Gehäuse an die Parabel angelegte Tangente mit der Gehäuseachse (X-X) einen Winkel in der Größenordnung von 15° einschließt.

7. Befeuchter nach Anspruch 2, dadurch gekennzeichnet, daß die Erzeugende der Rotationsfläche (27) ein Hyperbelzweig ist.

8. Befeuchter nach Anspruch 7, dadurch gekennzeichnet, daß jede Asymptote (H-H, H$^1$-H$^1$) der Hyperbel mit der Gehäuseachse (X-X) einen Winkel in der Größenordnung von 15° bildet.

9. Befeuchter nach einem der Ansprüche 1 bis 8, dadurch gekennzeichnet, daß die Wand der konischen Mantelfläche Heizmittel, wie elektrische Widerstände, enthält.

10. Befeuchter nach einem der Ansprüche 1 bis 9, dadurch gekennzeichnet, daß besagter Erzeuger ein Ultraschall-Wasserzerstäuber ist.

11. Befeuchter nach einem der Ansprüche 1 bis 9, dadurch gekennzeichnet, daß besagter Erzeuger eine Wasserdampfquelle ist.

12. Befeuchter nach Anspruch 11, dadurch gekennzeichnet, daß die Wasserdampfquelle durch ein Wasser enthaltendes Behältnis mit stromdurchflossenen Elektroden gebildet ist, die in das Behältnis hineingeführt sind.

13. Befeuchter nach einem der Ansprüche 1 bis 12, dadurch gekennzeichnet, daß stromabwärts von der konischen Mantelfläche quer zum Gehäuse ein Verdampfer (23) vorgesehen ist.

EP 0 345 190 B1

air chaud

FIG. 1

7

air chaud

FIG. 2

FIG. 3